# FASCICULE DE BREVET EUROPEEN

(11) **EP 2 217 962 B1**
(45) Date de publication et mention de la délivrance du brevet: **16.06.2021**
(21) Numéro de dépôt: 08865631.9
(22) Date de dépôt: 04.12.2008
(51) Int. Cl.: G02C 7/08, G02C 7/02, G02B 3/08

(54) **PASTILLE COURBE DE MODIFICATION D'UNE PUISSANCE D'UN COMPOSANT OPTIQUE**
GEKRÜMMTE SCHEIBE ZUR ÄNDERUNG DER BRECHKRAFT EINER OPTISCHEN KOMPONENTE
CURVED DISC FOR MODIFYING A POWER OF AN OPTICAL COMPONENT

(30) Priorité: 07.12.2007 FR 0759664
(43) Date de publication de la demande: 18.08.2010
(73) Titulaire: Essilor International, 94220 Charenton-le-Pont (FR)
(72) Inventeur: FERMIGIER, Bruno, F-94220 Charenton-Le-Pont (FR); KOSCHER, Matthieu, F-94220 Charenton-Le-Pont (FR)
(74) Mandataire: Plasseraud IP
(86) Numéro de dépôt international: PCT/FR2008/052205
(87) Numéro de publication internationale: WO 2009/080940

(56) Documents cités:
- EP-A- 0 368 751
- EP-A- 1 548 353
- WO-A-86/06846
- WO-A-97/10527
- WO-A-2007/141440
- WO-A1-97/10527
- US-A- 3 904 281
- US-A- 4 070 105
- US-A- 4 146 306
- US-A- 4 210 391

## Description

La présente invention concerne une pastille courbe destinée à être fixée sur une face concave d'un composant optique pour modifier une puissance optique de celui-ci. Elle concerne aussi un élément optique et une paire de lunettes qui incorporent une telle pastille.

Il peut être utile d'adapter la puissance d'un composant optique en fonction d'une utilisation particulière de celui-ci. Ce peut être le cas, par exemple, pour adapter un verre de lunettes de protection solaire à l'amétropie d'un porteur de ce verre. Dans le cadre de l'invention, la puissance d'un composant optique désigne la vergence de cet élément, et est couramment exprimée en dioptries.

Il est connu de réaliser une pastille en matériau transparent qui est destinée à être appliquée sur une face d'un composant optique, pour modifier la puissance de ce dernier. La pastille comprend une lentille de Fresnel qui est formée d'une série de zones de Fresnel disposées les unes à l'intérieur des autres parallèlement à une face lisse de la pastille. Ces zones présentent des sauts de hauteur entre deux zones successives qui sont plus grands que cinq fois une longueur d'onde moyenne de lumière visible, les sauts de hauteur étant mesurés selon une direction perpendiculaire à la tangente de la face lisse. Dans ces conditions, la pastille possède elle-même une puissance optique qui résulte de la réfraction des rayons lumineux sur les deux faces de la pastille dans chaque zone de Fresnel. Cette puissance optique de la pastille s'ajoute à celle du composant optique sur lequel elle est appliquée. L'utilisation d'une forme de lentille de Fresnel réduit l'épaisseur de la pastille pour obtenir une modification de puissance fixée, par rapport à une lentille additionnelle qui serait accolée au composant optique.

Ces pastilles possèdent une forme initiale plane, et doivent être courbées lorsqu'elles sont appliquées sur la surface courbe d'une lentille ou d'un verre ophtalmique. De telles pastilles sont notamment décrites dans le brevet US 3,904,281. Cette déformation de la pastille au moment de son application sur la lentille ou sur le verre ophtalmique crée des distorsions d'une image formée à travers la lentille ou le verre, une fois que celle-ci ou celui-ci est muni(e) de la pastille, ainsi que des aberrations optiques. En particulier, les distorsions de l'image varient dynamiquement lorsque l'objet observé se déplace dans le champ de vision ou lorsque le porteur du verre tourne la tête en suivant l'objet du regard. Ces distorsions d'image sont alors très gênantes. De plus des défauts liés soit à la diffusion et/ou à la diffraction peuvent apparaître dans différentes zones de la pastille renforçant la gène du porteur et/ou interférant avec la qualité cosmétique de l'objet celle-ci étant notamment identifiable par un observateur placé en face du porteur. Ces défauts sont d'autant plus importants que la modification de puissance optique apportée par la pastille est élevée. Enfin on a pu constater que le passage d'une pastille de modification de puissance d'une surface plane à une surface courbe entraîne un défaut dioptrique. Ainsi la puissance initiale de la pastille sous forme plane et la puissance effective de la pastille une fois appliquée sur un composant optique varient. Cette variation est fortement préjudiciable à la qualité de vision apportée à un porteur.

Des éléments optiques qui comportent une structure de Fresnel qui est interne, c'est-à-dire disposée à une interface entre deux composantes de l'élément qui sont appliquées l'une contre l'autre par cette interface sont décrites dans les documents WO 86/06846 A, US 4070105 A, et EP 0368751 A. Un but de la présente invention est de proposer une pastille de modification de puissance optique qui ne présente pas les inconvénients cités ci-dessus, et qui soit simple d'utilisation. Ainsi l'objet de la présente invention doit permettre un emploi aisé, par un porteur souhaitant simplement et sans effort, adapté la puissance d'un composant optique de type lentille ophtalmique à sa correction visuelle personnelle, par simple application de la pastille de modification de puissance à tout équipement optique.

Une solution à ce problème technique consiste à réaliser une structure de Fresnel au sein d'une pastille présentant une surface sphérique, ladite surface sphérique étant sensiblement identique à la surface sphérique du composant optique destinée à recevoir ladite pastille. Dans une telle configuration, l'objet de l'invention permet de résoudre les problèmes de distorsions, observés dans les éléments de l'état de l'art, lors du passage d'une surface plane à une surface courbe. Ceci constitue une des caractéristiques de l'invention.

Pour adapter au mieux la pastille de modification de puissance, il est nécessaire de prendre en compte la courbure du composant optique destiné à recevoir ladite pastille, lors de la conception du profil de la structure de Fresnel de la pastille. Toutefois un tel dispositif de modification de puissance peut présenter des défauts optiques dus d'une part à la diffraction et d'autre part à la diffusion selon les zones considérées de ladite pastille. Ces différentes problématiques trouvent une solution globale au sein de l'objet de la présente invention. Ainsi la présente invention comprend une pastille de modification de puissance à zones de Fresnel présentant un forme générale sphérique dans laquelle le profil de distribution des zones de Fresnel au travers de leur amplitude et de leur pas est judicieusement choisit: cette sélection permet de conférer à l'objet de l'invention, pour une puissance de correction donnée et un diamètre de la pastille établit, une élimination des distorsions telles que précédemment décrites et notamment un maintien de la puissance initiale de la pastille lors de son application sur un composant optique. De plus cette distribution spécifique des zones de Fresnel au sein de la pastille permet une minimisation de la diffraction dans une zone central de l'objet et une minimisation de la diffusion dans une zone non centrale de la pastille, cette dernière pouvant notamment être induite du fait de la limitation de résolution des outils et dispositifs permettant de réaliser de telles structures..

Pour cela, l'invention propose une pastille du type décrit ci-dessus présentant une série de zones de Fresnel sur sa face concave sphérique, la pastille étant destinée à être fixée sur une surface courbe concave d'un composant optique pour modifier la puissance de celui-ci. Par modifier on entend soit l'apport d'une puissance optique à un composant optique ne comprenant pas de puissance, soit une variation de la puissance optique à un composant optique comprenant déjà sa propre puissance optique. Ainsi selon l'invention, la pastille possède une forme généralement sphérique en plus des sauts de hauteur qui sont présents entre les zones de Fresnel, lesdites zones de Fresnel étant présentes sur la face concave de ladite pastille, et la face de la pastille entrant en contact avec le composant optique étant constitué par la face convexe lisse de ladite pastille. Autrement dit, la face convexe lisse de la pastille possède une courbure initiale qui correspond sensiblement à la forme de la surface courbe concave du composant optique destiné à recevoir ladite pastille. Selon un mode de réalisation particulier de l'invention cette face convexe lisse de la pastille peut présenter une surface cylindrique ou une surface torique. Dans un tel mode de réalisation, la pastille selon l'invention permet de prendre en compte une correction de l'astigmatisme d'un prteur. En effet une surface astigmate est caractérisée par le fait que les deux méridiens principaux n'ont pas le même rayon de courbure.

La face concave de la pastille qui comporte les sauts de hauteur possède également une courbure moyenne qui correspond aussi à ladite surface courbe du composant optique, cette face étant destinée à être en contact avec le milieu ambiant. Ainsi le profil global de la structure de Fresnel sur l'ensemble de la pastille présente une géométrie sphérique.

Au sens de l'invention on entend par composant optique les visières tels que les visières de casque et les lentilles ophtalmiques ; par lentilles ophtalmiques, on entend les lentilles s'adaptant notamment à une monture de lunette ou à un masque tel qu'un masque de ski, un masque solaire ou un masque de plongée, ainsi que les masques ayant pour fonction de protéger l'œil et/ou de corriger la vue, ces lentilles étant choisies parmi les lentilles afocales, unifocales, bifocales ou à addition progressive. Par masque, tel que les masques solaires, on entend une lentille constituée d'une seule pièce et destinée à être positionnée devant les deux yeux. De telles lentilles ophtalmiques ou visières peuvent être éventuellement teintées. Ces composants optiques au sens de l'invention peuvent optionnellement présenter une ou plusieurs fonctions apporter pas l'application d'un ou plusieurs revêtements et pouvant notamment être choisi parmi les revêtements photochromiques, anti-reflets, antisalissures, anti-chocs, anti-rayures, polarisants et antistatiques. L'invention est particulièrement adaptée aux lentilles ophtalmiques correctrices ou non correctrices. La pastille courbe de modification de puissance selon l'invention est constitué d'un matériau apte à lui procurer une cohésion avec le composant optique auquel elle doit être liée, cette cohésion étant soit naturelle et due aux propriétés intrinsèques collante du matériau (aussi dénommé "tack" ou "tackiness" en anglais), soit initiée au travers le dépôt d'une fine couche d'eau, celle-ci servant de vecteur pour initier et faciliter la mise en contact entre la pastille et le composant optique.

La présente invention comprend ainsi une pastille destinée à être fixée sur une surface courbe concave d'un composant optique pour modifier une puissance optique dudit composant, la pastille comprenant une lentille de Fresnel formée d'une série de zones de Fresnel disposées les unes à l'intérieur des autres parallèlement à une face lisse de ladite pastille et présentant des sauts de hauteur entre deux zones successives, lesdits sauts de hauteur étant mesurés selon une direction (z) perpendiculaire à la face lisse en un centre optique de la pastille (O), la pastille étant caractérisée en ce qu'elle possède:
- une forme générale sphérique en plus des sauts de hauteur entre zones de Fresnel successives, ladite forme générale sphérique présentant un rayon de courbure moyen compris entre 135 mm et 53 mm,
- et dans laquelle les sauts de hauteur entre zones de Fresnel successives sont situés sur une face concave de la pastille, lesdits sauts de hauteur entre zones de Fresnel successives présentant:
   - des amplitudes constantes à l'intérieur d'un cercle de rayon (C) entourant le centre optique de la pastille (O) et de dimension définit en fonction de la puissance de la pastille,
   - et des amplitudes variables qui augmentent dans une partie périphérique de la pastille, en s'éloignant du centre optique (O) à l'extérieur dudit cercle (C),
   - ledit cercle de rayon (C) présentant une valeur comprise entre 5 mm et 25 mm pour une puissance comprise entre 1 dioptrie et 10 dioptries, et une première amplitude centrale de saut de hauteur supérieure ou égale à 5µm.

Selon un mode préférentielle de l'invention, la pastille présente une forme générale sphérique comprenant un rayon de courbure moyen compris entre 88 mm et 53 mm, et très préférentiellement sensiblement égale à 66 mm. Ce rayon de courbure moyen de 66 mm correspond à une lentille ophtalmique de base 8, cette base étant de façon préférentielle mise en oeuvre pour la réalisation de lentille ophtalmiques de type solaire, c'est-à-dire comprenant une fonction de filtre. Ces lentilles ophtalmiques de type solaire présentent classiquement un taux de transmission dans le visible compris 88% et 6%. De telles lentilles ophtalmiques répondent aux critères de filtre de catégorie 1 à 4 selon la classification internationale utilisée pour classifier les filtres solaires.

Selon l'invention, les sauts de hauteur entre zones de Fresnel successives ont des amplitudes constantes à l'intérieur d'une zone entourant le centre optique de la pastille. La face concave de la pastille qui comporte les sauts de hauteur présente alors une hauteur de reliefs constante dans une partie centrale de cette face. Ceci contribue à limiter spécifiquement la diffraction au centre de la pastille. D'autre part selon une seconde caractéristique les sauts de hauteur entre zones de Fresnel successives à l'extérieure de cette zone central entourant le centre optique précédemment mentionnée, présentent des amplitudes variables jusqu'au bord externes de ladite pastille, ce type de profil spécifique permettant de limiter la diffusion dans cette zone de la pastille de puissance. L'ajustement du dimensionnement de l'amplitude constante dans une zone centrale et de l'amplitude variable dans une zone externe à cette zone centrale est choisit en fonction de la puissance et du diamètre de la pastille de modification de puissance, ces deux paramètres étant eux-mêmes ajustés en fonction de la correction visuelle personnelle d'un porteur et de son choix du composant optique sur lequel il souhaite adapter l'objet de la présente invention.

L'invention concerne aussi un élément optique qui comprend un composant optique de base et une pastille telle que décrite précédemment, fixée sur la face arrière concave du composant au moyen de sa face convexe lisse.

Comme décrit précédemment le composant optique de base peut être une lentille ophtalmique. De préférence, une telle lentille ophtalmique est teintée ou partiellement réfléchissante et présente éventuellement des propriétés optiques aptes à corriger une amétropie. La pastille est alors peu visible et ne réduit pas l'esthétisme d'une paire de lunettes qui comprend la lentille, lorsqu'elle est appliquée sur la face concave, ou face postérieure, de la lentille. Le profil de distribution spécifique des amplitudes constantes et variables des zones de Fresnel dans la pastille selon l'invention permet ainsi d'améliorer fortement l'esthétisme du dispositif, par minimisation notamment des effets physiques de diffraction et de diffusion des rayons lumineux. Ces derniers sont en effet non seulement gênants pour le confort et la qualité optique fournit au porteur, mais également perturbant pour un observateur placé en face du porteur.

L'invention concerne aussi une paire de lunettes qui comprend au moins une lentille et une pastille telle que décrite précédemment, qui est fixée sur la lentille. Une telle paire de lunettes peut être du type lunettes correctrices d'amétropie teintées ou non, ou lunettes ou masque de protection solaire non correctrice, en particulier.

D'autres particularités et avantages de la présente invention apparaîtront dans la description ci-après d'exemples de réalisation non limitatifs, en référence aux dessins annexés, dans lesquels :
- la figure 1a est une vue en perspective d'une pastille selon l'invention ;
- la figure 1b est une vue en coupe d'une pastille selon l'invention ;
- la figures 2a est une vue en coupe d'une lentille ophtalmique, apte à être adaptée à une paire de lunettes, munies de pastilles conformes à la figure 1 b;
- la figure 3 est un diagramme illustrant des variations de sauts de hauteur pour une pastille selon l'invention ;

Pour raison de clarté, les dimensions des éléments représentés ne sont pas en proportion avec des dimensions ou des rapports de dimensions réels. En outre des références identiques sur des figures différentes désignent des éléments identiques.

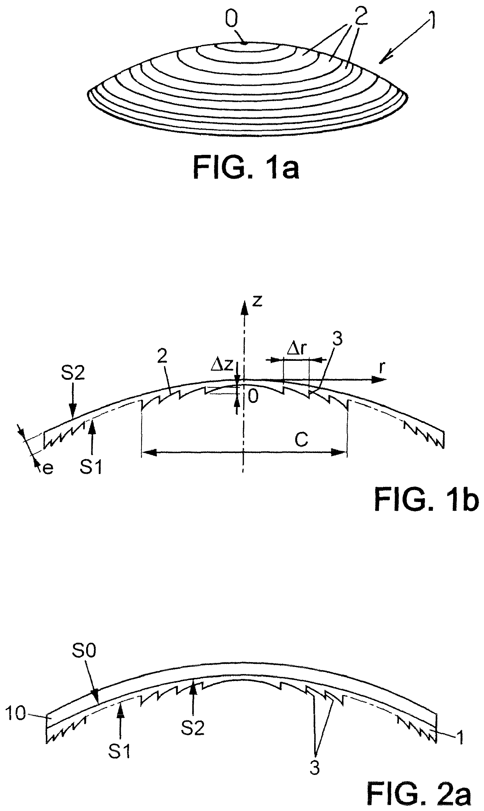

Conformément aux figures 1a et 1b, une pastille 1 selon l'invention possède une forme générale sphérique, ou en coupelle. De préférence, la pastille a une forme de calotte sphérique, avec un rayon de courbure moyen qui peut être de l'ordre de 66 mm (millimètres) par exemple. Un tel rayon de courbure correspond à la forme de la face postérieure, ou face concave, de nombreuses lentilles ophtalmiques de lunettes. Dans le cadre de l'invention, les pastilles possèdent un rayon de courbure moyen compris entre 135 mm et 53 mm, avantageusement compris entre 88 mm et 53 mm

La pastille 1 constitue une lentille de Fresnel : elle est formée d'une succession de zones de Fresnel qui sont disposées concentriquement de façon contiguë, par exemple 100 à 200 zones. Ces zones, référencées 2 sur les figures sont des couronnes coaxiales qui sont orientées et centrées selon un axe optique noté z. L'axe z passe alors par un centre optique de la pastille, qui est situé sur celle-ci et est noté O. De façon connue, chaque zone de Fresnel correspond à une portion de lentille, et l'épaisseur de la pastille 1 varie continûment à l'intérieur de cette zone selon une direction radiale, notée r, dans un plan perpendiculaire à l'axe z. Entre deux zones 2 successives, l'une des surfaces de la pastille 1 présente un saut de hauteur parallèle à l'axe z, référencé 3. Son amplitude est notée Δz. Il est précisé que les sauts de hauteur 3 qui sont présents entre des zones 2 successives sont superposés à la forme générale de la pastille 1, cette forme générale étant bombée, selon l'invention.

Les sauts de hauteur 3 correspondent à des discontinuités de hauteur de la face concave de la pastille 1, référencée S1, celle-ci étant destinée à rester en contact avec le milieu environnant. Entre deux sauts de hauteur 3 successifs, une zone de Fresnel 2 possède une dimension radiale qui est notée Δr, mesurée perpendiculairement à l'axe z. La face convexe de la pastille 1, référencée S2, est alors lisse et est destinée à être mise en contact avec un composant optique afin de constituer un élément optique selon l'invention. e désigne l'épaisseur moyenne de la pastille 1, entre les faces S1 et S2. Elle est mesurée perpendiculairement à la face S2. De préférence, l'épaisseur moyenne e est comprise entre 2 mm (millimètres) et 0,5 mm. Cette faible épaisseur de la pastille permet de limiter l'épaisseur de l'élément optique, et ainsi de maintenir l'esthétisme de l'objet. De plus la quantité de matière ajouté au composant optique étant faible cela permet de limiter le poids total de l'élément optique.

Afin de minimiser la diffusion lumineuse, et la diffraction et ne provoquer aucune irisation, ou bien que ces phénomènes ne soient pas perceptibles, les zones de Fresnel 2 sont dimensionnées de sorte que les amplitudes Δz des sauts de hauteur 3 sont au moins égales à cinq fois une longueur d'onde moyenne de la lumière visible. De plus ces zones de Fresnel sont réparties selon des amplitudes Δz constantes et variables en fonction de leur positionnement par rapport au centre optique (O) de la pastille. D'une façon globale, les amplitudes des sauts de hauteur 3 sont comprises entre 5 µm (micromètres) et 250 µm. De cette façon, à cause de la courte longueur de cohérence de la lumière naturelle, aucune interférence qui se produirait entre des parties d'un faisceau lumineux qui traversent des zones 2 différentes, n'est perceptible. Autrement dit, la pastille 1 a un effet optique purement réfractif, qui est lié à la forme des surfaces S1 et S2 dans chaque zone 2, et n'engendre aucun effet diffractif visible. Comme décrit précédemment les amplitudes des sauts de hauteur 3 entre zones de Fresnel successives sont constantes sur une partie centrale (C) et variable sur une partie de la surface de la pastille s'étendant à l'extérieur du cercle (C) jusqu'à une partie périphérique, tout en conservant un profil sensiblement sphérique à la surface (S1). Dans cette configuration, l'amplitude Δz est plus importante à la périphérie de la pastille que dans sa zone centrale. Ainsi selon l'invention, la pastille est telle que les sauts de hauteur (3) entre zones de Fresnel successives à l'intérieur du cercle (C) ont des amplitudes comprises entre 5 µm et 25 µm, et les sauts de hauteur (3) entres zones de Fresnel successives à l'extérieur du cercle (C) jusqu'à une partie périphérique de la pastille ont des amplitudes variables comprises entre 5 µm et 250 µm.

D'une façon avantageuse, la pastille est telle que les sauts de hauteur (3) entre zones de Fresnel successives à l'intérieur du cercle (C) ont des amplitudes comprises entre 10 µm et 20 µm,

Selon un mode de réalisation particulier de l'invention, la pastille peut présenter dans son bord périphérique latérale externe une troisième zone périphérique définit (A) sur la figure 1b, comprenant des sauts de hauteurs constants. Cette zone périphérique est parfois appelée zone non utile. En effet il est connu de l'homme de l'art que la zone optiquement utile couvre la totalité de la lentille qui présente un diamètre limité. Cependant dans certain cas, une zone périphérique est prévue sur les pourtours de la lentille ophtalmique. Cette zone est dite périphérique car elle ne répond pas aux conditions de correction optique prescrite et présente des défauts d'oblicités. Les défauts de cette zone périphérique ne nuisent pas au confort visuel du porteur car cette zone se situe en dehors du champ de vision du porteur. Cette zone dite périphérique (A) peut donc être prévue au sein de la pastille à modification de puissance et pour des raisons de réalisation et/ou d'esthétisme il peut être avantageux que cette dernière présente des zones de fresnel à amplitudes constantes. Ainsi selon ce mode de réalisation, la pastille est telle que les sauts de hauteur (3) entre zones de Fresnel successives dans la zone périphérique (A) ont des amplitudes constantes ladite amplitude correspondant à l'amplitude du dernier saut de hauteur (3) entre zones de Fresnel successives à l'extérieur du cercle (C), et une dimension (Δr) constante correspondant à la dimension (Δr) constante entre zones de Fresnel successives à l'extérieur du cercle (C)

La dimension radiale Δr de chaque zone 2 dépend alors de la puissance optique de la pastille 1 et de l'amplitude Δz des sauts de hauteur 3. Dans les conditions précédentes, et pour une puissance optique de la pastille 1 inférieure ou égale à 10 dioptries, Δr peut être comprise entre 100 µm et 5 mm. Selon l'invention, la pastille est telle que les zones de Fresnel (2) ont une dimension (Δr) variable comprise entre 5 mm et 100 µm à l'intérieure du cercle (C), la plus grande dimension se situant au plus prêt du centre (O) du cercle (C), et les zones de Fresnel (2) ont une dimension (Δr) constante comprise entre 500 µm et 100 µm à l'extérieur du cercle (C). D'une façon préférentielle, la pastille selon l'invention est telle que les zones de Fresnel (2) ont une dimension (Δr) variable comprise entre 2,5 mm et 250 µm à l'intérieure du cercle (C), la plus grande dimension se situant au plus prêt du centre (O) du cercle (C), et les zones de Fresnel (2) ont une dimension (Δr) constante de 250 µm à l'extérieur du cercle (C).

La pastille 1 peut avoir une vergence positive ou négative, en fonction du sens de variation de son épaisseur selon la direction r, à l'intérieur de chaque zone de Fresnel 2. La figure 1b correspond à une pastille convergente. La variation de l'épaisseur de la pastille à l'intérieur de chaque zone 2 peut être, en particulier, une fonction quadratique de r. La pastille selon l'invention peut également présenter un cylindre, celui-ci permettant alors d'apporter une prise en compte de l'astigmatisme du porteur si nécessaire. Dans ce mode de réalisation particulier, la pastille est telle que la face avant convexe lisse de ladite pastille présente une surface cylindrique ou une surface torique.

La figure 2a montre une lentille ophtalmique adaptable à une paire de lunettes qui sont munies, sur leurs faces postérieures S0, ou faces concaves, de pastilles conformes à la figure 1b. La lentille de la figure 2a, référencé 10, peut être une lentille de protection solaire avec une puissance optique nulle, étant donné qu'elle possède deux faces parallèles. La pastille 1 lui confère alors une puissance non nulle, qui permet de corriger un défaut d'amétropie et éventuellement d'astigmatisme d'un porteur de la lentille. De cette façon, la pastille 1 permet d'adapter n'importe quelle lentille de protection solaire à un porteur ayant une distorsion visuelle. La paire de lunettes comprenant une telle lentille 10 peut alors être choisie par le porteur en fonction de son esthétisme, de sa teinte, ou de la forme de la monture associée. La lentille de la figure 2a, référencé 10, correspond à une correction de myopie, étant donné qu'il est moins épais en son centre qu'à sa périphérie. La pastille 1 permet alors d'adapter la force de la correction en fonction du degré de myopie du porteur. Dans ce cas, la pastille 1 est placée sur le verre 10 de façon à superposer les axes optiques respectifs du verre et de la pastille. Une fonction identique est obtenue avec un verre correcteur d'hypermétropie.

La pastille 1 est appliquée sur la face postérieure S0 de la lentille 10 qui est lisse. Cette opération peut se faire directement par le praticien ou le porteur sur la paire de lunettes dans laquelle la lentille est montée sur la monture choisie par le porteur.

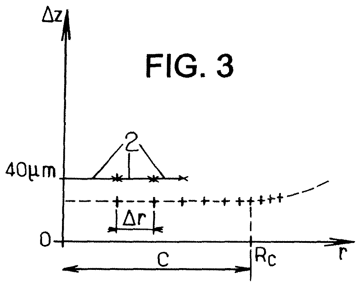

La figure 3 représente un exemple de variation des amplitudes Δz des sauts de hauteur 3 selon la direction radiale r. Lorsque r est inférieur au rayon R_{C} du cercle C, les amplitudes Δz des sauts 3 sont constantes et la dimension radiale Δr des zones 2 diminue pour des zones 2 de plus en plus grandes. Au delà de la valeur R_{C}, c'est-à-dire dans une partie périphérique de la pastille 1 à l'extérieur du cercle C, les sauts de hauteur 3 ont des amplitudes Δz qui augmentent.

La pastille 1 est collée sur la face S0 de la lentille 10, grâce aux propriétés d'adhésion intrinsèque du matériau constitutif de ladite pastille, ou éventuellement par utilisation d'une fine pellicule d'eau entre les deux interfaces, celle-ci servant de vecteur pour initier le contact entre les éléments. Ainsi selon l'invention le matériau constitutif de la pastille doit à la fois combiner des propriétés de transparence permettant de conserver la qualité optique du composant optique destiné à le recevoir, des propriétés de "tack", ainsi que des propriétés physiques permettant de lui conférer une certaine souplesse afin de l'adapter d'une façon au rayon de courbure du composant optique devant le porter. D'une façon avantageuse, la matériau constitutif de la pastille selon l'invention présente un dureté comprise entre 70 et 95 shore A, une diffusion comprise entre 2,0% et 0,4%, préférentiellement inférieure à 1%. Parmi les matériaux utilisables dons le cadre de l'invention on citera notamment, les matériaux transparents thermoplastiques choisi parmi les polymères polyuréthane, polychlorure de vinyle, polyéthylène téréphtalate, polyméthyl(meth)acrylate et polycarbonate. D'une façon préférentielle le matériau constitutif de la pastille est choisi parmi thermoplastiques polyuréthane et thermoplastique polychlorure de vinyle.

Le matériau de la lentille ophtalmique, peut quand à lui être de type minéral ou organique. A titre indicatif mais non limitatif, on peut citer comme matériau organique pouvant être utilisé dans le cadre de l'invention les matériaux classiquement utilisés en optique et en ophtalmie. Par exemple, sont adaptés les substrats du type polycarbonate; polyamide ; polyimides ; polysulfones ; copolymères de poly(éthylènetérephtalate) et polycarbonate; polyoléfines, notamment polynorbornènes ; polymères et copolymères de diéthylèneglycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide.

## Revendications

1. Pastille (1) destinée à être fixée sur une surface courbe concave (S0) d'un composant optique (10) pour modifier une puissance optique dudit composant, la pastille comprenant une lentille de Fresnel formée d'une série de zones de Fresnel (2) disposées les unes à l'intérieur des autres parallèlement à une face lisse de ladite pastille (S2) et présentant des sauts de hauteur (3) entre deux zones successives, lesdits sauts de hauteur étant mesurés selon une direction (z) perpendiculaire à la face lisse en un centre optique de la pastille (O), la pastille étant **caractérisée en ce qu'**elle possède:
- une forme générale sphérique en plus des sauts de hauteur (3) entre zones de Fresnel successives, ladite forme générale sphérique présentant un rayon de courbure moyen compris entre 135 mm et 53 mm,
- et dans laquelle les sauts de hauteur (3) entre zones de Fresnel successives sont situés sur une face (S1) concave de la pastille, lesdits sauts de hauteur (3) entre zones de Fresnel successives présentant:
- des amplitudes constantes à l'intérieur d'un cercle de rayon (C) entourant le centre optique de la pastille (O) et de dimension définit en fonction de la puissance de la pastille,
- et des amplitudes variables qui augmentent dans une partie périphérique de la pastille, en s'éloignant du centre optique (O) à l'extérieur dudit cercle (C),
- ledit cercle de rayon (C) présentant une valeur comprise entre 5 mm et 25 mm pour une puissance comprise entre 1 dioptrie et 10 dioptries, et une première amplitude centrale de saut de hauteur supérieure ou égale à 5µm.

2. Pastille selon la revendication 1 présentant un rayon de courbure moyen compris entre 88 mm et 53 mm, et préférentiellement égale à 66 mm.

3. Pastille selon l'une quelconque des revendications 1 ou 2, dans laquelle les sauts de hauteur (3) entre zones de Fresnel successives à l'intérieur du cercle (C) ont des amplitudes comprises entre 5 µm et 25 µm, et les sauts de hauteur (3) entres zones de Fresnel successives à l'extérieur du cercle (C) jusqu'à une partie périphérique de la pastille ont des amplitudes variables comprises entre 5 µm et 250 µm.

4. Pastille selon la revendication 3, dans laquelle les sauts de hauteur (3) entre zones de Fresnel successives à l'intérieur du cercle (C) ont des amplitudes comprises entre 10 µm et 20 µm,

5. Pastille selon l'une quelconque des revendications précédentes, dans laquelle les zones de Fresnel (2) ont une dimension (Δr) comprise entre 100 µm et 5 mm, selon une direction radiale (r) passant par le centre optique (O) et perpendiculaire à un axe optique de la pastille.

6. Pastille selon la revendication 5 dans laquelle les zones de Fresnel (2) ont une dimension (Δr) variable comprise entre 5 mm et 100 µm à l'intérieure du cercle (C) la plus grande dimension se situant au plus prêt du centre (O) du cercle (C), et les zones de Fresnel (2) ont une dimension (Δr) constante comprise entre 500 µm et 100 µm à l'extérieur du cercle (C).

7. Pastille selon la revendication 6 dans laquelle les zones de Fresnel (2) ont une dimension (Δr) variable comprise entre 2,5 mm et 250 µm à l'intérieure du cercle (C), la plus grande dimension se situant au plus prêt du centre (O) du cercle (C), et les zones de Fresnel (2) ont une dimension (Δr) constante de 250 µm à l'extérieur du cercle (C)..

8. Pastille selon l'une quelconque des revendications précédentes, dans laquelle les sauts de hauteur (3) entre zones de Fresnel successives dans la zone périphérique (A) ont des amplitudes constantes ladite amplitude correspondant à l'amplitude du dernier saut de hauteur (3) entre zones de Fresnel successives à l'extérieur du cercle (C), et une dimension (Δr) constante correspondant à la dimension (Δr) constante entre zones de Fresnel successives à l'extérieur du cercle (C)

9. Pastille selon l'une quelconque des revendications précédentes, ayant une épaisseur moyenne (e) comprise entre 2 mm et 0,5 mm, mesurée perpendiculairement à la face lisse (S2) de la pastille.

10. Pastille selon l'une quelconque des revendications précédentes dans laquelle la face avant convexe lisse de ladite pastille présente une surface cylindrique ou une surface torique.

11. Pastille selon l'une quelconque des revendications précédentes, comprenant un matériau transparent présentant une dureté comprise entre 70 et 95 shore A.

12. Pastille selon l'une quelconque des revendications précédentes, comprenant un matériau transparent présentant une diffusion comprise entre 2,0 % et 0,4 %, préférentiellement inférieure à 1%.

13. Pastille selon l'une quelconque des revendications 11 et 12, comprenant un matériau thermoplastique transparent choisi parmi les polymères polyuréthane, polychlorure de vinyle, polyéthylène téréphtalate, polyméthyl(meth)acrylate et polycarbonate.

14. Pastille selon la revendication 13 comprenant un matériau transparent choisit parmi thermoplastiques polyuréthane et thermoplastique polychlorure de vinyle.

15. Elément optique comprenant un composant optique de base (10) et une pastille (1) selon l'une quelconque des revendications 1 à 14, ladite pastille étant fixée sur la face arrière concave dudit composant au moyen de sa face convexe lisse..

16. Elément selon la revendication 15, dans lequel la pastille (1) est fixée sur le composant (10) au moyen d'une pellicule d'eau disposée en tant que vecteur entre ladite pastille et ledit composant.

17. Elément selon l'une quelconque des revendications 15 ou 16, dans lequel le composant de base est une lentille ophtalmique.

18. Elément selon la revendication 17, dans lequel le composant de base est une lentille ophtalmique correctrice d'amétropie.

19. Elément selon la revendication 17 ou 18, dans lequel la lentille ophtalmique est teintée ou partiellement réfléchissante.

20. Elément selon l'une quelconque des revendications 15 à 19, dans lequel le composant de base est une lentille adaptée à une paire de lunettes de protection solaire (10).

21. Elément selon l'une quelconque des revendications 15 à 19, dans lequel le composant de base est une lentille de masque, notamment masque solaire, de ski ou de plongée, ou une visière, notamment une visière de casque.

22. Paire de lunettes comprenant au moins une lentille (10,) et une pastille (1) selon l'une quelconque des revendications 1 à 14, fixée sur ladite lentille.

## Patentansprüche

1. Scheibe (1), die dazu bestimmt ist, auf einer gekrümmten konkaven Fläche (S0) einer optischen Komponente (10) befestigt zu werden, um eine optische Leistung der Komponente zu ändern, wobei die Scheibe eine Fresnel-Linse umfasst, die aus einer Reihe von Fresnel-Zonen (2) gebildet ist, die innerhalb voneinander parallel zu einer glatten Seite der Scheibe (S2) angeordnet sind, und Höhensprünge (3) zwischen zwei aufeinander folgenden Zonen aufweist, wobei die Höhensprünge entlang einer Richtung (z) gemessen werden, die in einem optischen Mittelpunkt der Scheibe (O) senkrecht zu der glatten Seite verläuft, wobei die Scheibe **dadurch gekennzeichnet ist, dass** sie besitzt:
- eine kugelförmige Grundform zusätzlich zu den Höhensprüngen (3) zwischen aufeinander folgenden Fresnel-Zonen, wobei die kugelförmige Grundform einen mittleren Krümmungsradius zwischen 135 mm und 53 mm aufweist,
- und bei der die Höhensprünge (3) zwischen aufeinander folgenden Fresnel-Zonen auf einer konkaven Seite (S1) der Scheibe gelegen sind, wobei die Höhensprünge (3) zwischen aufeinander folgenden Fresnel-Zonen aufweisen:
- konstante Amplituden innerhalb eines Kreises mit dem Radius (C), der den optischen Mittelpunkt der Scheibe (O) umgibt, und mit einem Maß, das in Abhängigkeit von der Leistung der Scheibe definiert wird,
- und variable Amplituden, die in einem Randbereich der Scheibe vom optischen Mittelpunkt (O) weg zunehmen, außerhalb des Kreises (C),
- wobei der Kreis mit dem Radius (C) einen Wert zwischen 5 mm und 25 mm bei einer Leistung zwischen 1 Dioptrie und 10 Dioptrien und eine erste zentrale Höhensprungamplitude größer oder gleich 5 µm aufweist.

2. Scheibe nach Anspruch 1, die einen mittleren Krümmungsradius zwischen 88 mm und 53 mmm und bevorzugt gleich 66 mm aufweist.

3. Scheibe nach einem der Ansprüche 1 oder 2, bei der die Höhensprünge (3) zwischen aufeinander folgenden Fresnel-Zonen innerhalb des Kreises (C) Amplituden zwischen 5 µm und 25 µm haben und die Höhensprünge (3) zwischen aufeinander folgenden Fresnel-Zonen außerhalb des Kreises (C) bis zu einem Randbereich der Scheibe variable Amplituden zwischen 5 µm und 250 µm haben.

4. Scheibe nach Anspruch 3, bei der die Höhensprünge (3) zwischen aufeinander folgenden Fresnel-Zonen innerhalb des Kreises (C) Amplituden zwischen 10 µm und 20 µm haben.

5. Scheibe nach einem der vorhergehenden Ansprüche, bei der die Fresnel-Zonen (2) ein Maß (Δr) zwischen 100 µm und 5 mm entlang einer radialen Richtung (r) haben, die durch den optischen Mittelpunkt (O) und senkrecht zu einer optischen Achse der Scheibe verläuft.

6. Scheibe nach Anspruch 5, bei der die Fresnel-Zonen (2) ein variables Maß (Δr) zwischen 5 mm und 100 µm innerhalb des Kreises (C) haben, wobei das größte Maß zum Mittelpunkt (O) des Kreises (C) nächstgelegen ist, und die Fresnel-Zonen (2) ein konstantes Maß (Δr) zwischen 500 µm und 100 µm außerhalb des Kreises (C) haben.

7. Scheibe nach Anspruch 6, bei der die Fresnel-Zonen (2) ein variables Maß (Δr) zwischen 2,5 mm und 250 µm innerhalb des Kreises (C) haben, wobei das größte Maß zum Mittelpunkt (O) des Kreises (C) nächstgelegen ist, und die Fresnel-Zonen (2) ein konstantes Maß (Δr) von 250 µm außerhalb des Kreises (C) haben.

8. Scheibe nach einem der vorhergehenden Ansprüche, bei der die Höhensprünge (3) zwischen aufeinander folgenden Fresnel-Zonen im Randbereich (A) konstante Amplituden haben, wobei die Amplitude der Amplitude des letzten Höhensprungs (3) zwischen aufeinander folgenden Fresnel-Zonen außerhalb des Kreises (C) entspricht, und ein konstantes Maß (Δr), das dem konstanten Maß (Δr) zwischen aufeinander folgenden Fresnel-Zonen außerhalb des Kreises (C) entspricht.

9. Scheibe nach einem der vorhergehenden Ansprüche, die eine mittlere Dicke (e), senkrecht zur glatten Seite (S2) der Scheibe gemessen, zwischen 2 mm und 0,5 mm hat.

10. Scheibe nach einem der vorhergehenden Ansprüche, bei der die glatte konvexe Vorderseite der Scheibe eine zylindrische Fläche oder eine torische Fläche aufweist.

11. Scheibe nach einem der vorhergehenden Ansprüche, die ein transparentes Material umfasst, das eine Härte zwischen 70 und 95 Shore A aufweist.

12. Scheibe nach einem der vorhergehenden Ansprüche, die ein transparentes Material umfasst, das eine Streuung zwischen 2,0 % und 0,4 %, bevorzugt von weniger als 1 % aufweist.

13. Scheibe nach einem der Ansprüche 11 und 12, die ein transparentes thermoplastisches Material umfasst, das unter den Polymeren Polyurethan, Polyvinylchlorid, Polyethylenterephthalat, Polymethyl(meth)acrylat und Polycarbonat gewählt ist.

14. Scheibe nach Anspruch 13, die ein transparentes Material umfasst, das aus thermoplastischem Polyurethan und thermoplastischem Polyvinylchlorid gewählt ist.

15. Optisches Element, das eine optische Basiskomponente (10) und eine Scheibe (1) nach einem der Ansprüche 1 bis 14 umfasst, wobei die Scheibe auf der konkaven Rückseite der Komponente mittels ihrer glatten konvexen Seite befestigt ist.

16. Element nach Anspruch 15, bei dem die Scheibe (1) an der Komponente (10) mittels eines Wasserfilms befestigt ist, der als Vektor zwischen der Scheibe und der Komponente angeordnet ist.

17. Element nach einem der Ansprüche 15 oder 16, bei dem die Basiskomponente eine ophthalmische Linse ist.

18. Element nach Anspruch 17, bei dem die Basiskomponente eine Fehlsichtigkeit korrigierende ophthalmische Linse ist.

19. Element nach Anspruch 17 oder 18, bei dem die ophthalmische Linse getönt oder teilweise reflektierend ist.

20. Element nach einem der Ansprüche 15 bis 19, bei dem die Basiskomponente eine Linse ist, die an eine Sonnenschutzbrille (10) angepasst ist.

21. Element nach einem der Ansprüche 15 bis 19, bei dem die Basiskomponente eine Linse einer Brille, insbesondere einer Sonnen-, Ski- oder Taucherbrille, oder ein Visier, insbesondere ein Helmvisier ist.

22. Brille, die mindestens eine Linse (10) und eine Scheibe (1) nach einem der Ansprüche 1 bis 14, die an der Linse befestigt ist, umfasst.

## Claims

1. Pad (1) intended to be fastened to a concave curved surface (S0) of an optical component (10) so as to modify an optical power of said component, the pad comprising a Fresnel lens formed from a series of Fresnel regions (2) placed inside one another parallel to a smooth face of said pad (S2) and exhibiting height jumps (3) between two successive regions, said height jumps being measured in a direction (z) perpendicular to the smooth face at an optical centre (O) of the pad, the pad being **characterized in that** it possesses:
- a spherical general shape in addition to the height jumps (3) between successive Fresnel regions, said spherical general shape having an average radius of curvature comprised between 135 mm and 53 mm,
- and wherein the height jumps (3) between successive Fresnel regions are located on a concave face (S1) of the pad, said height jumps (3) between successive Fresnel regions exhibiting:
- constant amplitudes inside a radius circle (C) encircling the optical centre (O) of the pad and of dimension defined depending on the power of the pad,
- and variable amplitudes that increase in a peripheral portion of the pad, with distance from the optical centre (O) to the exterior of said circle (C),
- said radius circle (C) having a value comprised between 5 mm and 25 mm for a power comprised between 1 dioptre and 10 dioptres, and a central first height-jump amplitude higher than or equal to 5 µm.

2. Pad according to Claim 1 having an average radius of curvature comprised between 88 mm and 53 mm, and preferably equal to 66 mm.

3. Pad according to either one of Claims 1 and 2, wherein the height jumps (3) between successive Fresnel regions inside the circle (C) have amplitudes comprised between 5 µm and 25 µm, and the height jumps (3) between successive Fresnel regions outside the circle (C) up to a peripheral portion of the pad have variable amplitudes comprised between 5 µm and 250 µm.

4. Pad according to Claim 3, wherein the height jumps (3) between successive Fresnel regions inside the circle (C) have amplitudes comprised between 10 µm and 20 µm.

5. Pad according to any one of the preceding claims, wherein the Fresnel regions (2) have a dimension (Δr) comprised between 100 µm and 5 mm, in a radial direction (r) passing through the optical centre (O) and perpendicular to an optical axis of the pad.

6. Pad according to Claim 5, wherein the Fresnel regions (2) have a variable dimension (Δr) comprised between 5 mm and 100 µm inside the circle (C), the largest dimension being located closest the centre (O) of the circle (C), and the Fresnel regions (2) have a constant dimension (Δr) comprised between 500 µm and 100 µm outside the circle (C).

7. Pad according to Claim 6, wherein the Fresnel regions (2) have a variable dimension (Δr) comprised between 2.5 mm and 250 µm inside the circle (C), the largest dimension being located closest the centre (O) of the circle (C), and the Fresnel regions (2) have a constant dimension (Δr) of 250 µm outside the circle (C) .

8. Pad according to any one of the preceding claims, wherein the height jumps (3) between successive Fresnel regions in the peripheral region (A) have constant amplitudes, said amplitude corresponding to the amplitude of the last height jump (3) between successive Fresnel regions outside the circle (C), and a constant dimension (Δr) corresponding to the constant dimension (Δr) between successive Fresnel regions outside the circle (C).

9. Pad according to any one of the preceding claims, having an average thickness (e) comprised between 2 mm and 0.5 mm, measured perpendicular to the smooth face (S2) of the pad.

10. Pad according to any one of the preceding claims, wherein the smooth convex front face of said pad has a cylindrical surface or a toric surface.

11. Pad according to any one of the preceding claims, comprising a transparent material having a Shore A hardness comprised between 70 and 95.

12. Pad according to any one of the preceding claims, comprising a transparent material having a diffusion comprised between 2% and 0.4%, and preferably lower than 1%.

13. Pad according to either one of Claims 11 and 12, comprising a transparent thermoplastic chosen from the polymers polyurethane, polyvinyl chloride, polyethylene terephthalate, polymethyl methacrylate and polycarbonate.

14. Pad according to Claim 13 comprising a transparent material chosen from thermoplastic polyurethanes and thermoplastic polyvinyl chloride.

15. Optical element comprising a base optical component (10) and a pad (1) according to any one of Claims 1 to 14, said pad being fastened to the concave rear face of said component by means of its smooth convex face.

16. Element according to Claim 15, wherein the pad (1) is fastened to the component (10) by means of a film of water placed by way of vector between said pad and said component.

17. Element according to any one either one of Claims 15 and 16, wherein the base component is an ophthalmic lens.

18. Element according to Claim 17, wherein the base component is an ophthalmic lens for correcting ametropia.

19. Element according to Claim 17 or 18, wherein the ophthalmic lens is tinted or partially reflective.

20. Element according to any one of Claims 15 to 19, wherein the base component is a lens suitable for a pair of spectacles (10) for protecting against the sun.

21. Element according to any one of Claims 15 to 19, wherein the base component is a lens of a mask or pair of googles, especially of a welding mask, of a pair of ski goggles or of a diving mask, or a visor, especially a helmet visor.

22. Pair of spectacles comprising at least one lens (10), and one pad (1) according to any one of Claims 1 to 14 fastened to said lens.
